(19) Europäisches Patentamt

European Patent Office

Office européen des brevets

(11) **EP 1 724 192 A1**

(12) **EUROPEAN PATENT APPLICATION**

(43) Date of publication:
**22.11.2006 Bulletin 2006/47**

(51) Int Cl.:
*B64C 27/10* *(2006.01)*    *B64C 27/82* *(2006.01)*

(21) Application number: **05425295.2**

(22) Date of filing: **04.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Nostrini, Mauro Achille**
**41053 Maranello, MO (IT)**

(72) Inventor: **Nostrini, Mauro Achille**
**41053 Maranello, MO (IT)**

(54) **Structure and control system of an aircraft equipped with rotors for lift and vertical flight, and with a pusher-propeller for horizontal thrust**

(57) The invention concerns a rotary-wing aircraft equipped with counter-rotating coaxial rotors for lift and vertical flight, and with a pusher-propeller for horizontal thrust. Both the devices are operated by means of only one power unit. The flight conditions are obtained by the joint use of the collective pitch change of the rotors and the pitch change of the propeller.

Fig. 3

EP 1 724 192 A1

## Description

### Description of the invention

The invention concerns a "vertical takeoff and landing aircraft" characterized by "dual-rotation rotor" for the sustentation,and a pusher propeller for the horizontal flight. Both the rotors and the propeller are operated by a single power unit,and both of them are equipped with "collective pitch control" . Therefore the subyect of this invention avails itself of a typology, for the flight control, that shows affinities and analogies both for what is relating to the helicopter and to the airplane.

The PRESENT STATE OF THE TECHNIQUE shows substantially three basic types of "rotary-wing aircraft" ; in brief one can define these as :

----- Helicopter :

it is characterized by a "main rotor" whose blades can assume several grades of attack(by means of the "collective pitch control") and several inclinations respectively to the rotor shaft (by means of the "cyclic pitch control").

Usually the present helicopters have a single main rotor ; so it is necessary to counter the "torque reaction" (induced by the rotor) with the effect of a suitably placed propeller(tail rotor) which is powered by the same motor,and therefore with consequent horsepower absorption.

One can obtain takeoff and landing perfectly vertical by means of the "collective pitch control",whereas the advance and the lateral as well as backwards movements are obtained bv means of the "cyclic pitch change" .

The direction control is obtained by means of the pitch-change of the above-mentioned tail rotor.

It follows that there are four basic drives for the flight control of a normal helicopter :

the "throttle lever of the motor", the"stick of the collective pitch control", the"stick of the cyclic pitch control", the "tail rotor control pedals" .

It must be emphasized that any action on each of the aforesaid drives implies a necessary,joint action also on the remaining drives.

Besides the present helicopters are usually unstable by "free drives", and stable only by "blocked drives" ; all this compels the pilot to keep the levers at a certain position, and to exert on these a certain force. Therefore this necessitates a constant and tiring pilotage as well as considerable flight experience.

------ Autogiro :

it is characterized by a rotor for its sustentation,that, rather than being operated by a motor,it is operated by the apparent wind,whereas the advance is caused to a pusher-propeller powered by means of a suitable motor.

The vertical takeoff is therefore impossible, since, for this aim, the rotor makes itself efficient just after the attainment of some speed. For the autogiro the "torque-reaction compensation" by means of a tail-proneller is not required, since the rotor is "idle" and not connected to a motor (in its turn connected to the frame ).

------ Gyrodine ( or Gyroplane) :

it is almost an autogiro for which also the sustentation-rotor is powered by its own motor (auxiliary motor ) .

In order to complete the description of the present technological state,we have also to take into account a few examples of helicopters with "dual-rotation rotor " ( coaxial and reverse rotating rotors) .

In this case the tail propeller is not necessary, since the two torque-reaction cancel each other out ; but, as regards to these examples,the translation is still obtained by means of the "cyclic pitch control" on both rotors,and this can imply some difficulties.

The subject of this invention consists of an aircraft having the following properties :

--A) : a single power unit which,by a suitable reduction unit, operates at the same time both a pusher-propeller and the sustentation assembly.The latter consists of two coaxial, reverserotating rotors ("dual-rotation rotor") ; for this reason the tail rotor is not necessary,which,in itself,would absorb some percentage of the available power.

-- B) : both the rotors and the propeller are provided with "collective pitch control",therefore it's Possible to transfer some power from the rotors to the propeller,and viceversa,for each different flight situation required.

All of that is made possible by a peculiar characteristic of the "rotating wing",on which basis the induced drag by the "main rotors" (and so the respective induced power) decreases consequently with the increase of the translation speed .

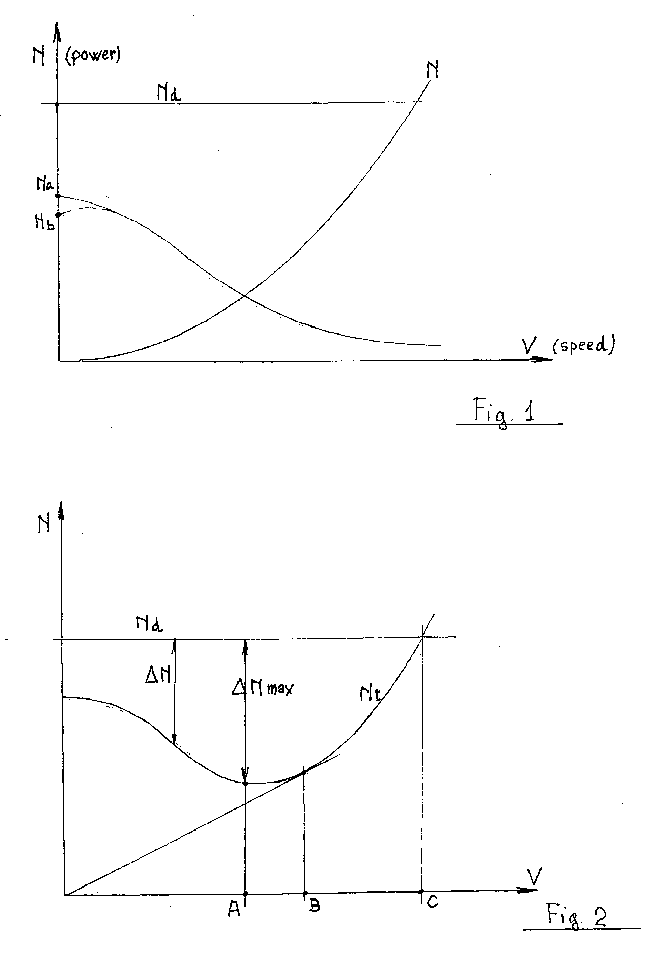

Each flight situation can be shown by the Diagrams (power--translation speed) of FiG.1 and Fig.2 in which are defined :

Na : absorbed power from the rotors by hovering O.G.E.

Nb : ,, ,, , , ,, , ,, I.G.E.

Nr : ,, ,, , , ,, , translation

Np : absorbed power from propeller

Nt =Nr +Np : total power required to the motor

Nd : available power of the motor
N : power surplus

The points A , B , C identify :

"A" : the speed of max. autonomy per hour
"B" : , ,, , , ,, per Km.
"C" : the speed limit

The point "A" defines also the max." Rate of Climb " $R/C = \dfrac{\Delta \, Nmax}{Q}$ where "Q" is the weight of the aircraft -- C) : the "collective pitch control" of the propeller makes feasible also the negative pitch change ; the backwards translation is therefore possible, or,if necessary,also a braking effect.

All the above-mentioned pitch changes, both on the rotors and on the propeller, are practically feasible according to the usual kinematic chains of the aircrafts in general,and of the helicopter in particular.

The pitch shange controls can be manual and instinctive,or obtained by an automatic and programmable logic system, as a function of the absorbed power by the several flight conditions.

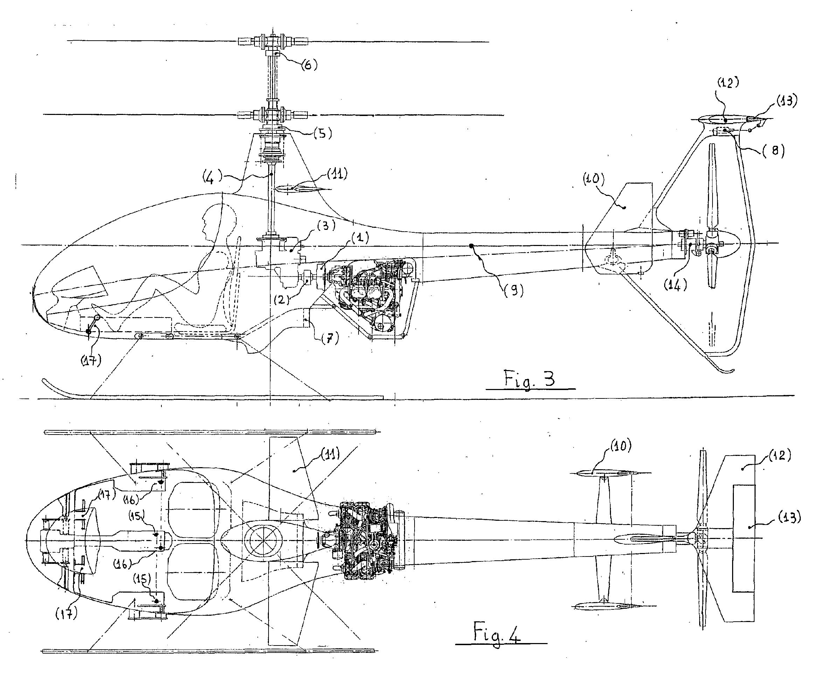

-- D ) : There are basically two devices for the direction change,at concomitant action : a pair of movable fins (10) FiG.3,4,5 placed on the tail boom,and a pair of ailerons on an almost barycentric section (11) FiG. 3,4,9 .

Both devices are at the same time operated by control pedals according to a kinematic ratio,immovable or automatically programmed,according to the required flight conditions.

The aileron,necessary for the result of "corrected turn" (11).

Fig. 3,4,9 have identical operation to that which is required for any airplane ; they are placed on an almost centra section in order to feel softly the effect of the rotor airstream ,but effectively the effect of the translation wind.Contrary to that the two fins are on purpose exposed to the rotor airstream in order to also perform the function of"yaw control" by the hovering and vertical flight condition.

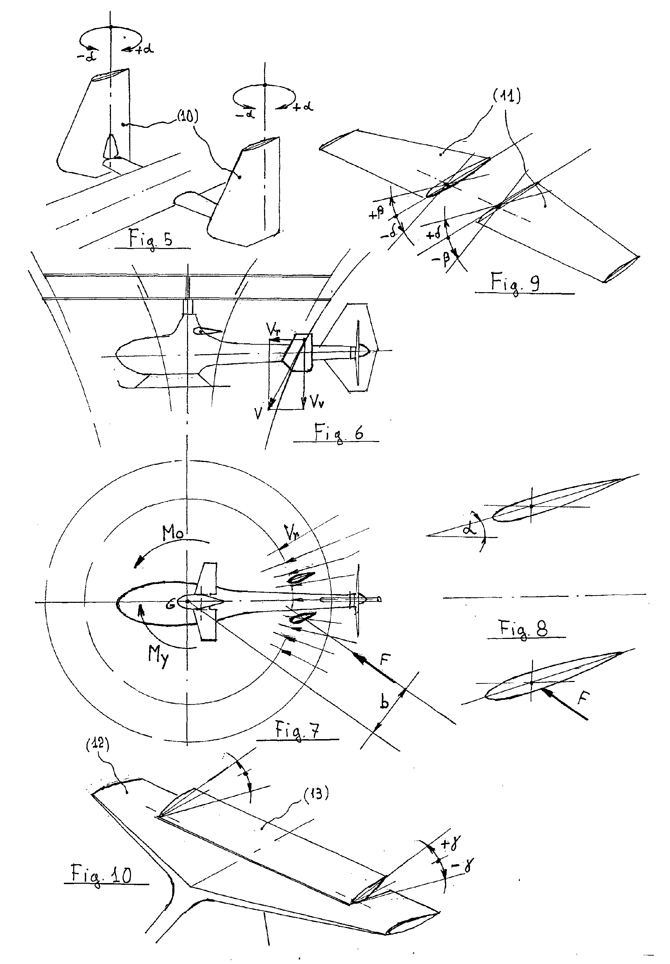

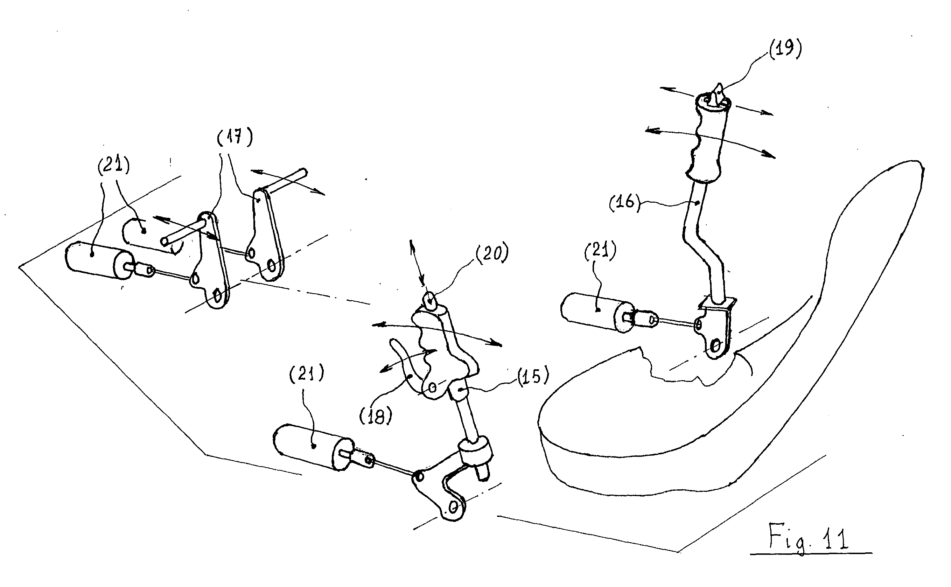

In fact,as shown in Fig.6 ,7 in the ring,underlying zone of the rotor,the rotor-flow velocity is not vertical, butitalso has a radial component (Vr).It follow therefore a dynamic effect (F) on the fin which is subject to the radial component of the velocity; this effect causes a barycentric moment Mo =F.b,which can oppose to the development of a yawing moment My Fig.6 ,7 ,8 ). -- E ) : Availability of a "trim tab" . In fact,since the loads on the aircraft ( weight and aerodinamir forces) can have variations,in order to obtain constantly a required longitudinal attitude of flight,the intervention of a trim tab is necessary. This (13) Fig.10 belongs to the tail plane placed so as not to be influenced by the rotor airstream,but by the translation wind only .Its actuation can be both mechanic and electric or hydraulic.

On the basis of the explained characteristic of this invention ( characteristics A-B-C-D-E ) the respective,following control devices are necessary :

--- the throttle lever of the motor (18) Fig.11
--- the stick of the collective pitch control of the rotor (15) Fig. 3,4,11
--- the stick of the pitch control of the propeller (16) Fig. 3,4,11
--- the pedals of the fins and aileron control (17) Fig. 3,4,11
--- the control device of the trim tab;
since there is reference as in the example, to a control system by means of an electric motor, a double-pole switch for the polarity reverse is therefore shown.It is placed over the handgripp of the stick for the Ditch control of the propeller (19) Fig.11 .

The throttle lever is connected to the handgripp of the stick for the collective pitch control ; it is released by the shown release button (20) Fig.11.

The control devices operate directly the respective servo-actuators,which,in this illustrative case,are shown as hydraulic cylinders (21) Fig.11 .

N.B. : the arrangement in the cockpit of the above-mentioned control devices requires a strict analogy with what is required for the ordinary helicopter.

<u>Main ADVANTAGES of the invention</u> compared to the pre-existing technical state regarding the aircrafts with rotating wing.

These advantages derive practically from the lack of the cyclic pitch change of the rotors blades,a system which makes the translation possible. But in this case,as previously mentio-ned , one resots,for this purpose,to a pusher-propeller,whose place excludes the possibility of the typical tail rotor of the helicopter ; consequently a "dual-rotation rotor" is necessary. In comparison with the ordinary helicopter that means :

--- to have a simpler approach with the new flight technique especially for the new users and also for those pilots who,for a long time now,pilot airplanes only.For these,on certain occasions of emergency, the by now instinctive controls for the airplane might be fatal if operated on an helicopter ; for example : rapid dives or zoomings by means of the "cyclic control" ,which would cause very dangerous situations, up to the "mast bumping" or the "droop stop" pounding" (according to the type of the rotor).

Instead,as essential property of the present aircraft,it's not possible to obtain height change except exclusively by means of the "collective pitch control" : so in all circumstances the aircraft keeps constantly an almost level trim.

-- the lack of flutters in the transient state ( transition from vertical to translated flight and viceversa) .In fact for the helicopter this state is characterized by the phennnenon of the "blowback" of the rotor, caused to the cyclic change of the lift of the blades. Instead this is not the case for the present aircraft, since the devices for the sustentation and those for the translation are independent of each other .

--- Interdependence of the control less restrictive compared to the ordinary helicopter : the omitted quickness of correction with one of the controls doesn't imply dangerous situations.

--- no permanent use of the pedals,exclusively limited to control of the direction change. In fact for the present aircraft there aren't torque reactions to contrast (use of "dual--rotation rotor),and effects of gyroscopic precession (lack of the cyclic pitch change).

--- the possibility of the flight in those wind conditions, which would nullify the effects of the tail rotor of the ordinary helicopter.

--- lesser stress on the rotors blades and their articulations for the lack of the cyclic pitch change of the blades themselves .

--- availability of the percentage of the power (usually 7 / 9% of the motor' s power) that,for the helicopter is dissipated power,as absorbed to the tail rotor.

With reference to the enclosed DRAWINGS (still of a schematic nature) :

the Fig.1 and Fig.2 show,as before better specified in detail, the diagrams power-speed concerning the flight conditions.

The Fig.3 and Fig.4 show respectively the lateral view and the top view of the aircraft,where the details are identified by the following numbers :

(1) the centrifugal clutch. - (2) the flexible coupling (3) the reduction unit of the motor's revolutions : it operates simultaneously both the rotors and the pusher-propeller (4) the two coaxial shafts of the rotors. - (5) sliding plate for the collective pitch change of the lower rotor.-(6) sliding plate of the collective Ditch change of the upper rotor. (7) water and oil coolers.- (8) actuator for the trim tab control.- (9) shft of the propeller.- (10) movable fins for the direction change and yaw control.-(11) the ailerons of "corrected turn" .- (12) tail plane .- (13) trim tab for the longitudinal trim control.- (14) pitch change unit of the propeller.- (15) stick of the collective pitch control of the propeller.- (17) the pedals of the fins and ailerons control.

The Fig5 and Fig.9 show a perspective view respectively of the fins and the ailerons,as well as their rotations. The Fig.6 ,Fig.7 ,Fig8 show the rotor airstream and the configuration of the "treads" ; and therefore also the stream velocity (V),its components (Vr) , (Vv), and the consequent dynamic loads on the fins (F) .

The Fig.10 shows the trim tab (13) and its rotation relatively to the tail plane (12) .

The Fig.11 shows the arrangement of the controls in the cockpit; the details are identified by the following numbers :

(15) the stick (for the left hand) of the collective pitch control of the rotors.
(16) the stick (for the right hand) of the pitch change of the propeller .
(17) the pedal for the joint control of the fins and ailerons. 518) the throttle lever of the motor.
(19)the double-pole switch for the control of the trim tab.
(20) the release button of the throttle lever .
(21) the servo-actuators (showed,in this illustrative case, as hydraulic cylinders ) .

For what concerns one of the ways for the CARRING OUT of the INVENTION one can refer to the drawings of the Fig.3 and

Fig.4 : they refer to a plan of a U.L.M. aircraft ( ultralight motor-aircraft) bi-place,dual flight control.

From preliminary calculations,the following characteristics are expected :

- weight at takeoff 450 Kg. - max speed 190 Km/h- Rate of climb 1100 fts/ min. - speed of max.autonomy /h 105 Km./h speed of max. autonomy /Km. 150 Km./h

The structural characteristic are provided for the present regulation in the subject of U.L.M.

**Claims**

1. Rotatig-wing aircraft **characterized by** only one power unit, which operates a "dual-rotating rotor" for the sustentation-and, at the same time,a pusher-propeller for the translation.

2. Aircraft as claimed in Claim 1) **characterized** hy the flight conditions are obtained by the joint use of the "collective pitch control" of the rotors,and of the pitch change control of the propeller,in the sense that,for each flight condition, the available pover is shared out among the two devices as a function of the respective pitch changes .

3. Aircraft as claimed in Claim 2) **characterized by** the above--mentioned sharing out of the available power,and thatis the joint pitch changes of the rotors and of the propeller,can be obtained directly by the manual controls,as obtained by an automatic and programmable logic system.

4. Aircraft as claimed in Claim 1) **characterized by** the direction change is obtained by the control of a pair of movable fins (10)Fig.5 , and of two ailerons (11) Fig.9 having opposite aerodynamic effects.

5. Aircraft as claimed in Claim 1) **characterized by** the longitudinal trim is obtained by a trim tab (13) Fig.10 placed on the tail plane (12) Fig.10 .

Fig. 1

Fig. 2

Fig. 3

Fig. 4

Fig. 5

Fig. 9

Fig. 6

Fig. 7

Fig. 8

Fig. 10

Fig. 11

**European Patent Office**

**EUROPEAN SEARCH REPORT**

Application Number

EP 05 42 5295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/218093 A1 (MILLEA VINCENT FRANCIS ET AL) 27 November 2003 (2003-11-27) * paragraph [0027] - paragraph [0033] * * figures 1A,1B * | 1,4,5 | B64C27/10 B64C27/82 |
| X | CH 666 664 A5 (HANS BERGER) 15 August 1988 (1988-08-15) | 1-3 | |
| Y | * the whole document * | 4,5 | |
| A | US 5 174 523 A (BALMFORD ET AL) 29 December 1992 (1992-12-29) * the whole document * | 2,3 | |
| A | US 4 488 851 A (YOUNG ET AL) 18 December 1984 (1984-12-18) * the whole document * | 2,3 | |
| Y | US 3 332 643 A (TONER CHARLES V) 25 July 1967 (1967-07-25) * column 5, line 70 - column 6, line 11 * * figure 1 * | 4 | |
| Y | US 4 928 907 A (ZUCK ET AL) 29 May 1990 (1990-05-29) * column 4, lines 48-50 * * figures 1-3 * | 4 | TECHNICAL FIELDS SEARCHED (IPC)<br><br>B64C |
| Y | US 5 645 249 A (HEIN ET AL) 8 July 1997 (1997-07-08) * column 2, lines 32-42 * * figures 1,2 * | 4 | |
| Y | US 6 123 291 A (DEQUIN ET AL) 26 September 2000 (2000-09-26) * abstract * | 5 | |

-/--

The present search report has been drawn up for all claims

| Place of search | Date of completion of the search | Examiner |
|---|---|---|
| Munich | 15 December 2005 | Pedersen, K |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

............................................................................

& : member of the same patent family, corresponding
   document

EPO FORM 1503 03.82 (P04C01)

**European Patent Office**

**EUROPEAN SEARCH REPORT**

Application Number

EP 05 42 5295

## DOCUMENTS CONSIDERED TO BE RELEVANT

| Category | Citation of document with indication, where appropriate, of relevant passages | Relevant to claim |
|---|---|---|
| A | US 4 783 023 A (JUPE ET AL) 8 November 1988 (1988-11-08) * abstract * ----- | 1 |
| A | WO 2005/005250 A (LOPER, ARTHUR, W) 20 January 2005 (2005-01-20) * figure 5 * ----- | 1 |
| L | WARWICK G: "HIGH-SPEED HELICOPTER GATHERS PACE" FLIGHT INTERNATIONAL, REED BUSINESS INFORMATION, SUTTON SURREY, GB, vol. 167, no. 4988, 7 June 2005 (2005-06-07), page 8, XP001229807 ISSN: 0015-3710 * the whole document * ----- | 1-3 |

CLASSIFICATION OF THE APPLICATION (IPC)

TECHNICAL FIELDS SEARCHED (IPC)

The present search report has been drawn up for all claims

| Place of search | Date of completion of the search | Examiner |
|---|---|---|
| Munich | 15 December 2005 | Pedersen, K |

EPO FORM 1503 03.82 (P04C01)

EP 1 724 192 A1

**ANNEX TO THE EUROPEAN SEARCH REPORT
ON EUROPEAN PATENT APPLICATION NO.**

EP 05 42 5295

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2005

| Patent document cited in search report | | Publication date | Patent family member(s) | | Publication date |
|---|---|---|---|---|---|
| US 2003218093 | A1 | 27-11-2003 | NONE | | |
| CH 666664 | A5 | 15-08-1988 | NONE | | |
| US 5174523 | A | 29-12-1992 | NONE | | |
| US 4488851 | A | 18-12-1984 | NONE | | |
| US 3332643 | A | 25-07-1967 | NONE | | |
| US 4928907 | A | 29-05-1990 | NONE | | |
| US 5645249 | A | 08-07-1997 | NONE | | |
| US 6123291 | A | 26-09-2000 | FR | 2771706 A1 | 04-06-1999 |
| US 4783023 | A | 08-11-1988 | GB | 2197629 A | 25-05-1988 |
| WO 2005005250 | A | 20-01-2005 | US | 2005151001 A1 | 14-07-2005 |

EPO FORM P0459

For more details about this annex : see Official Journal of the European Patent Office, No. 12/82